(19) Europäisches Patentamt
European Patent Office
Office européen des brevets

(11) Veröffentlichungsnummer: **0 169 992**
**A1**

(12) # EUROPÄISCHE PATENTANMELDUNG

(21) Anmeldenummer: **85106181.2**

(22) Anmeldetag: **21.05.85**

(51) Int. Cl.[4]: **C 07 F 7/18**
**C 07 F 7/10**

(30) Priorität: **04.07.84 DE 3424534**

(43) Veröffentlichungstag der Anmeldung:
**05.02.86 Patentblatt 86/6**

(84) Benannte Vertragsstaaten:
**AT BE CH DE FR GB IT LI NL**

(71) Anmelder: **Degussa Aktiengesellschaft**
**Weissfrauenstrasse 9**
**D-6000 Frankfurt am Main 1(DE)**

(72) Erfinder: **Deschler, Ulrich, Dr.**
**Birkenweg 1**
**D-6450 Hanau 9(DE)**

(72) Erfinder: **Buder, Wolfgang, Dr.**
**Loteamento Farol de Itapoan Rua F Nr. 7**
**Salvador Bahia(BR)**

(72) Erfinder: **Kleinschmit, Peter, Dr.**
**Wildaustrasse 19**
**D-6450 Hanau 9(DE)**

(72) Erfinder: **Michel, Rudolf**
**Josefstrasse 36**
**D-6463 Freigericht(DE)**

(54) **-N,N'- und N,N',N'-substituierte Silylharnstoffe und Verfahren zu deren Herstellung.**

(57) Die Erfindung betrifft N,N'-und N,N',N-substituierte Silylharnstoffe und ein Verfahren zu ihrer Herstellung, bei dem in einem einstufigen Verfahren ein Halogenalkylsilan oder ein Halogenarylalkylsilan mit einem primären oder sekundären Amin und einem Alkalicyanat in äquimolaren Mengen umgesetzt werden.

EP 0 169 992 A1

Croydon Printing Company Ltd

D e g u s s a Aktiengesellschaft

6000 Frankfurt am Main, Weissfrauenstraße 9

# N,N'- und N,N',N'-substituierte Silylharnstoffe und Verfahren zu deren Herstellung

Die Erfindung betrifft N,N'- und N,N',N'-substituierte Silylharnstoffe und ein Verfahren zu ihrer Herstellung.

N-substituierte Silylharnstoffe sind seit langem bekannt und werden als Haftvermittler und zur Glasfaserbeschichtung eingesetzt (US-PS 4 271 229, EP-OS 77 036).

Es sind aber nur einige wenige N,N'- und erst ein N,N',N'-substituierter Silylharnstoff beschrieben worden. Auch diese finden ihre Verwendung auf dem oben angegebenen Gebiet.

Die niederländische Patentanmeldung 80 06 415 betrifft die Beschichtung von Glasfasern mit Polyurethandispersionen, die als funktionelle Silylharnstoffe $\gamma$-Methylureidopropyltriethoxysilan oder $\gamma$-Dimethylureidopropyltriethoxysilan enthalten. Die genaue Stellung der Methylgruppen ist nicht offenbart. Ein Verfahrensschema zur Herstellung von N',N'-Dimethyl-3-trimethoxysilylpropylharnstoff kann man der US-PS 40 46 794 entnehmen. Danach setzt man 3-Isocyanatopropyltrialkoxysilan mit Dimethylamin um.

Gemäß der JP-OS 81 57 792 (C.A. 1981, 95: 204 144 w) erhält man N'-Cyclohexyl- bzw. N'-Phenyl-substituierte Silylharnstoffe durch Behandlung von 3-Aminopropylsilanen mit Phenyl- bzw. Cyclohexylisocyanat.

In der US-PS 3 493 461 wird ein N,N'-Bis-3-trimethoxysilylpropylharnstoff beschrieben, ohne daß jedoch eine Herstellvorschrift offenbart würde.

Diese Verbindung findet Verwendung bei der Behandlung von Glasfasern, die in Polyvinylchlorid eingearbeitet werden sollen.

Aufgabe der Erfindung sind N,N'- und N,N',N'-substituierte Silylfunktionelle Harnstoffe und ein einfaches Verfahren zu deren Herstellung.

Gegenstand der Erfindung sind N,N'- und N,N',N'-substituierte Silylharnstoffe der Formel (I)

$$(RO)_{3-n}(CH_3)_nSi-R^1-NH-CO-N{<}^{R^2}_{R^3} ,$$

in der bedeuten

n: O oder 1

R: $C_1$-$C_6$ Alkyl, linear oder verzweigt, Phenyl, $C_5$-$C_8$ Cycloalkyl

$R^1$: $-(CH_2)_3-$, $-(CH_2)_2-$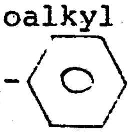$-CH_2-$,

$R^2$: Wasserstoff,

$R^2$, $R^3$: gleich oder verschieden:

$C_1$-$C_{18}$ Alkyl, linear oder verzweigt,

$C_5$-$C_8$ Cycloalkyl,

$C_1$-$C_3$ Alkyl, endständig substituiert durch eine Amino-, Thio- oder Cyanogruppe,

$-(C_2H_4NH)_mH$ mit m : 2 oder 3,

$C_3$-$C_{18}$ Alkenyl, linear oder verzweigt,

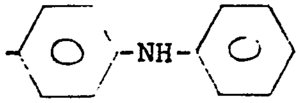 ,

Benzyl, Phenyl, Naphthyl, Pyridyl, Triazyl, gegebenenfalls ein oder mehrfach substituiert durch eine Amino-, Hydroxyl-, Thio-, $C_1$-$C_3$ Alkoxy-, Nitro- oder Carboxylgruppe,

oder Silylreste der Formel (II)

$$(RO)_{3-n}(CH_3)_nSi-R^4$$

in der n und R die Bedeutung haben, die oben angegeben wird und $R^4$: $C_1$-$C_3$ Alkylen, $-(CH_2)_2-$ 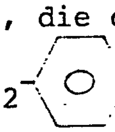 $-CH_2-$ ist,

oder daß $R^2$ und $R^3$ zusammen mit dem Stickstoffatom sowie gegebenenfalls einem oder zwei weiteren Heteroatomen einen einwertigen fünf- bis vierzehngliedrigen gesättigten oder ungesättigten cyclischen Rest mit 2 bis 12 C-Atomen bilden, der ggf. mehrkernig ist, mit Ausnahme der Verbindungen

1. $(C_2H_5O)_2R^6S$: $(CH_2)_3$-NH-CO-NHR$^5$
   mit $R^5$: Cyclohexyl und $R^6$: Methyl
   oder $R^5$: Phenyl und $R^6$: Ethoxy
   und

2. $(CH_3O)_3Si(CH_2)_3$-NH-CO-NH-$(CH_2)_3$-Si$(OC_2H_5)_3$
   und

3. 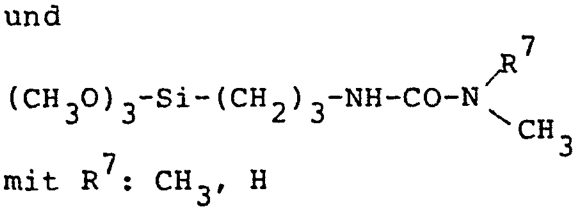 .
   mit $R^7$: $CH_3$, H

Weiterer Gegenstand der Erfindung ist ein Verfahren zur Herstellung der neuen ebenso wie der an sich bekannten Verbindungen, das in einem Schritt abläuft, zu hohen Produktausbeuten führt und ohne die gemäß dem Stand der Technik entsprechenden notwendigen Isolierung des Silylalkylisocyanats auskommt.

Die gewünschten Verbindungen werden auf dem erfindungsgemäßen Weg in ausgezeichneter Ausbeute hergestellt.

Das Verfahren zur Herstellung ist dadurch gekennzeichnet, daß man
der Lösung einer Aminoverbindung der
Formel (III)

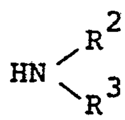 ,

in der $R^2$ und $R^3$ die bereits angegebenen Bedeutungen haben,
in einem aprotischen, polaren organischen Lösungsmittel erst eine äquimolare Menge Alkalicyanat und anschließend die äquimolare Menge eines Halogensilans der
Formel (IV)

$$(RO)_{3-n}(CH_3)_nSi-R^1-X$$ zusetzt,

in der R, $R^1$ und n die bereits angegebenen Bedeutungen haben, und X = Cl, Br oder I ist,
auf 120 bis 155 °C erwärmt,
1 bis 8 Stunden bei 130 bis 150 °C, bevorzugt 4 Stunden bei 140 °C, rührt und nach erfolgter Umsetzung das gewünschte Produkt abtrennt.

Das neue Verfahren umfasst somit auch die Verbindungen, die in Anspruch 1 vom Stoffschutz ausgenommen werden.

Als Lösungsmittel besonders geeignet sind Dimethylformamid (DMF) und Dimethylsulfoxid (DMSO).

Als Amine gemäß Formel (III) werden bevorzugt eingesetzt: Di- und Mono-Alkylamine mit gerader oder verzweigter Alkylkette mit bis zu 18 C-Atomen, Ethylendiamin, Diethylentriamin, Triethylentetraamin, Diallylamin, Allylamin, 3-Aminophenol, 2-Mercaptoanilin, Benzylamin, 4-Methoxyanilin, 4-Nitroanilin, 4-Aminodiphenylamin, 1,8-Naphthalindiamin, Diphenylamin, 1-Naphthylphenylamin, 2-Naphthylphenylamin, N-Isopropyl-N'-phenyl-p-phenylendiamin, N-(1,3-dimethylbutyl)-N'-phenyl-p-phenylendiamin, N,N'-bis (1,4-dimethylpentyl)p-phenylendiamin, Imidazol, Pyrazol, 1,2,3-Triazol, 1,2,4-Triazol, Piperazine, Pyrazolin, Imidazolidin, Morpholin, Thiazolidin, Indazol, Azimidobenzol, Benzimidazol, Indol, Phenothiazin.

Unter den eingesetzten Aminosilylverbindungen werden bevorzugt Trialkoxyverbindungen, insbesondere 3-Aminopropyltriethoxy- und -trimethoxysilan, Aminomethyltriethoxy- und -trimethoxysilan, Bis(-3-triethoxysilylpropyl)amin, Bis(-3-trimethoxysilylpropyl)amin oder 3-Aminopropylmethyldiethoxy- und -dimethoxysilan.

Um Umesterungen während der Reaktion zu vermeiden, zieht man es vor, die Aminosilanverbindungen gemäß Formel (III) nur mit solchen Halogensilanverbindungen gemäß Formel (IV) umzusetzen, die die gleichen Alkoxy-, Cycloalkoxy- bzw. Aryloxygruppen besitzen.

Als Alkalicyanat setzt man insbesondere Kaliumcyanat ein.

Die Lösungsmittelmenge beträgt 250 bis 400, bevorzugt 300 ml, pro Mol Amin. Steigt während der Umsetzung die Viskosität des Reaktionsgemisches stark an, dosiert man Lösungsmittel nach. Nach Ablauf der Reaktion läßt man das Gemisch auf Raumtemperatur abkühlen, filtriert das ausgefallene Salz ab und gewinnt die gewünschte Verbindung nach dem Absaugen des Lösungsmittels.

Nach diesem Verfahrensschema werden die im Beispielteil aufgeführten erfindungsgemäßen Verbindungen gemäß Formel I hergestellt, die durch die Angabe der entsprechenden Analysenwerte als besonders hervorgehoben anzusehen sind. Die Analysenwerte sind in eine getrennte Tabelle mit den entsprechenden Beispielnummern eingeordnet. Als Lösungsmittel diente bei den Versuchen Dimethylformamid und Dimethylsulfoxid.

| Beispiel | Silaneinsatzstoff | Amin | Produkt |
|---|---|---|---|
| 1 | $(CH_3O)_3Si-C_3H_6-Cl$ | $H_2N-C_2H_4-NH_2$ | $(CH_3O)_3Si-C_3H_6-NH-CO-NH-C_2H_4-NH_2$ |
| 2 | $(C_2H_5O)_3Si-C_3H_6-Cl$ | $H_2N-C_2H_4-NH_2$ | $(C_2H_5O)_3Si-C_3H_6-NH-CO-NH-C_2H_4-NH_2$ |
| 3 | $(C_3H_7O)_3Si-C_3H_6-Cl$ | $H_2N-C_6H_4-NH-C_6H_5$ | $(C_3H_7O)_3Si-C_3H_6-NH-CO-NH-C_6H_4-NH$<br>$C_6H_5$ |
| 4 | $(CH_3O)_2Si-C_3H_6-Cl$<br>$CH_3$ | $HN(C_6H_5)_2$ | $(CH_3O)_2Si-C_3H_6-NH-CO-N(C_6H_5)_2$<br>$CH_3$ |
| 5 | $(CH_3O)_3Si-C_2H_4-C_6H_4-CH_2-Cl$ | $H_2N-C_2H_4-NH_2$ | $(CH_3O)_3Si-C_2H_4-C_6H_4-CH_2-NH-CO-NH-C_2H_4$<br>$NH_2$ |
| 6 | $(CH_3O)_3Si-C_3H_6-Br$ | $H_2N-C_6H_4-NH-C_6H_5$ | $(CH_3O)_3Si-C_3H_6-NH-CO-NH-C_6H_4-NH-C_6H_5$ |
| 7 | $(C_2H_5O)_3Si-C_3H_6-J$ | $HN(C_6H_5)_2$ | $(C_2H_5O)_3Si-C_3H_6-NH-CO-N(C_6H_5)_2$ |
| 8 | $(CH_3O)_3Si-C_3H_6-Cl$ | $H_2N-C_8H_{17}$ | $(CH_3O)_3Si-C_3H_6-NH-CO-NH-C_8H_{17}$ |
| 9 | $(CH_3O)_3Si-C_3H_6-Cl$ | $H_2N-C_{18}H_{37}$ | $(CH_3O)_3Si-C_3H_6-NH-CO-NH-C_{18}H_{37}$ |
| 10 | $(CH_3O)_3Si-C_3H_6-Cl$ | $H_2N-C_8H_{16}-CH=CH-C_8H_{17}$ | $(CH_3O)_3Si-C_3H_6-NH-CO-NH-C_8H_{16}-CH=CH$<br>$C_8H_{17}$ |
| 11 | $(CH_3O)_3Si-C_3H_6-Cl$ | $H_2N-C_2H_4(-NH-C_2H_4)_2NH_2$ | $(CH_3O)_3Si-C_3H_6-NH-CO-(NH-C_2H_4-)_3NH_2$ |
| 12 | $(C_2H_5O)_3Si-C_3H_6-Cl$ | $H_2N-C_3H_6-Si(OC_2H_5)_3$ | $(C_2H_5O)_3Si-C_3H_6-NH-CO-NH-C_3H_6-Si(OC_2H_5)_3$ |

0169992

| Beispiel | Silaneinsatzstoff | Amin | Produkt |
|---|---|---|---|
| 13 | $(CH_3O)_3Si-C_3H_6-Cl$ | $H_2N-C_2H_4-N(C_2H_5)_2$ | $(CH_3O)_3Si-C_3H_6-NH-CO-NH-C_2H_4-N(C_2H_5)_2$ |
| 14 | $(CH_3O)_3Si-C_3H_6-Cl$ | 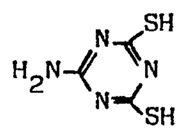 | $(CH_3O)_3Si-C_3H_6-NH-CO-NH-$ 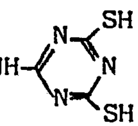 |
| 15 | $(C_2H_5O)_3Si-C_3H_6-Cl$ | $HN(C_4H_9)_2$ | $(C_2H_5O)_3Si-C_3H_6-NH-CO-N(C_4H_9)_2$ |
| 16 | $(CH_3O)_3Si-C_3H_6-Cl$ | $HN(CH_2-CH=CH_2)_2$ | $(CH_3O)_3Si-C_3H_6-NH-CO-N(CH_2-CH=CH_2)_2$ |
| 17 | $(CH_3O)_3Si-C_3H_6-Cl$ | $HN(CH_2-CN)_2$ | $(CH_3O)_3Si-C_3H_6-NH-CO-N(CH_2-CN)_2$ |
| 18 | $(C_2H_5O)_3Si-C_3H_6-Cl$ | $HN(C_3H_6-Si(OC_2H_5)_3)_2$ | $(C_2H_5O)_3Si-C_3H_6-NH-CO-N(C_3H_6-Si(OC_2H_5)_3)_2$ |
| 19 | $(CH_3O)_3Si-C_3H_6-Cl$ | $H_2N-CH_2-C_6H_5$ | $(CH_3O)_3Si-C_3H_6-NH-CO-NH-CH_2$<br>$C_6H_5$ |
| 20 | $(CH_3O)_3Si-C_3H_6-Cl$ | $H_2N-C_6H_4-NH-C_6H_5$ | $(CH_3O)_3Si-C_3H_6-NH-CO-NH-C_6H_4-NH$<br>$C_6H_5$ |
| 21 | $(CH_3O)_3Si-C_3H_6-Cl$ | 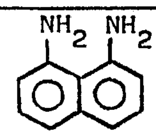 | $(CH_3O)_3Si-C_3H_6-NH-CO-NH$ 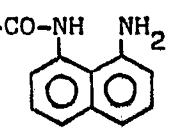 |
| 22 | $(CH_3O)_3Si-C_3H_6-Cl$ | 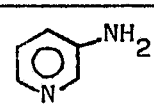 | $(CH_3O)_3Si-C_3H_6-NH-CO-NH$ 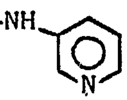 |

| Beispiel | Silaneinsatzstoff | Amin | Produkt |
|---|---|---|---|
| 23 | $(CH_3O)_3Si-C_3H_6-Cl$ | 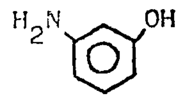 | 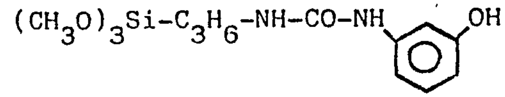 |
| 24 | $(CH_3O)_3Si-C_3H_6-Cl$ | 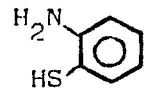 | 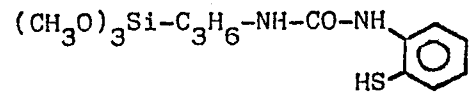 |
| 25 | $(CH_3O)_3Si-C_3H_6-Cl$ | 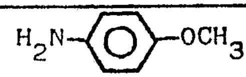 | 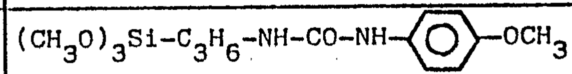 |
| 26 | $(CH_3O)_3Si-C_3H_6-Cl$ | 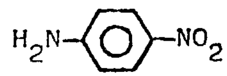 | 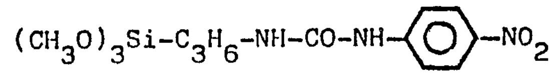 |
| 27 | $(CH_3O)_3Si-C_3H_6-Cl$ | 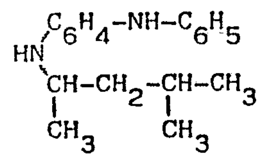 | 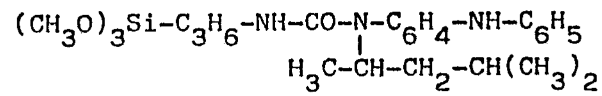 |
| 28 | $(CH_3O)_3Si-C_3H_6-Cl$ | $HN(C_6H_5)_2$ | $(CH_3O)_3Si-C_3H_6-NH-CO-N(C_6H_5)_2$ |
| 29 | $(CH_3O)_3Si-C_3H_6-Cl$ | 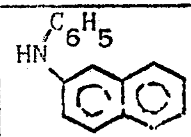 | 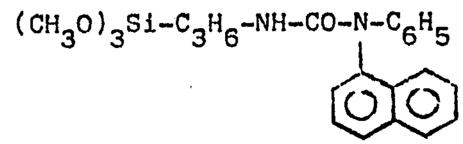 |
| 30 | $(CH_3O)_3Si-C_3H_6-Cl$ | 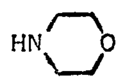 | 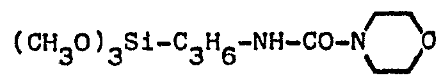 |
| 31 | $(CH_3O)_3Si-C_3H_6-Cl$ | 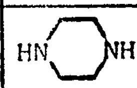 | 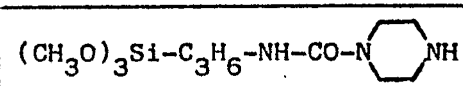 |

| Beispiel | Silaneinsatzstoff | Amin | Produkt |
|---|---|---|---|
| 32 | $(CH_3O)_3Si-C_3H_6-Cl$ | 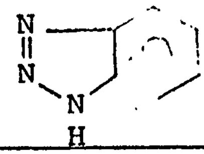 | $(CH_3O)_3Si-C_3H_6-NH-CO-$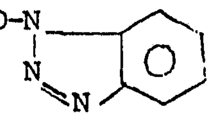 |
| 33 | $(CH_3O)_3Si-C_3H_6-Cl$ | 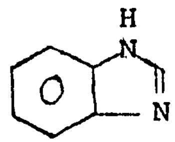 | $(CH_3O)_3Si-C_3H_6-NH-CO-$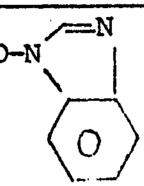 |
| 34 | $(CH_3O)_3Si-C_3H_6-Cl$ | 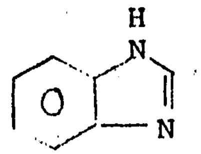 | $(CH_3O)_3Si-C_3H_6-NH-CO-$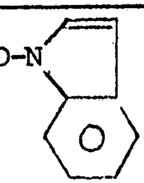 |
| 35 | $(CH_3O)_3Si-C_3H_6-Cl$ | 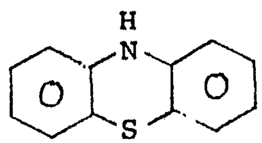 | $(CH_3O)_3Si-C_3H_6-NH-CO-$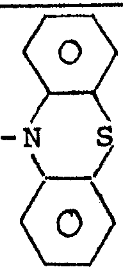 |
| 36 | $(CH_3O)_3Si-C_3H_6-Cl$ | $H_2N-$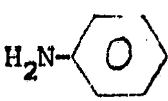$-CO_2H$ | $(CH_3O)_3Si-C_3H_6-NH-CO-NH-$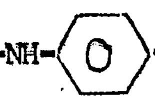$-CO_2H$ |

| Beispiel | Ausbeute in % | Analysen berechnet / gefunden % C | % H | % N | Anmerkungen |
|---|---|---|---|---|---|
| 1 | 97,8 | 40,73<br>39,21 | 8,73<br>8,15 | 15,83<br>13,65 | |
| 2 | 90,9 | 46,88<br>46,66 | 9,50<br>9,48 | 13,66<br>11,91 | |
| 3 | 96,1 | 63,39<br>62,87 | 8,30<br>8,13 | 8,87<br>8,50 | Einsatz von NaOCN |
| 4 | 82,8 | 63,65<br>64,59 | 7,31<br>8,12 | 7,81<br>8,48 | |
| 5 | 99,2 | 52,76<br>52,58 | 7,97<br>7,19 | 12,31<br>10,40 | |
| 6 | 99,5 | 58,58<br>57,08 | 6,98<br>6,93 | 10,78<br>11,08 | |
| 7 | 83,2 | 63,43<br>63,58 | 7,74<br>8,11 | 6,72<br>6,81 | Einsatz von NaOCN |
| 8 | 98,4 | 53,85<br>52,94 | 10,24<br>10,97 | 8,37<br>8,34 | |
| 9 | 92,5 | 63,24<br>64,95 | 11,46<br>12,02 | 5,90<br>5,60 | Einsatz von NaOCN |
| 10 | 92,1 | 63,51<br>62,69 | 11,08<br>11,43 | 5,92<br>5,81 | |
| 11 | 99,0 | 44,42<br>44,67 | 9,46<br>8,64 | 19,92<br>19,66 | |
| 12 | 84,8 | 48,68<br>48,07 | 9,46<br>10,48 | 5,97<br>5,65 | |
| 13 | 88,0 | 48,56<br>47,98 | 9,72<br>10,15 | 13,07<br>12,99 | |
| 14 | 99,5 | 32,86<br>32,05 | 5,24<br>6,17 | 19,16<br>19,39 | |
| 15 | 98,4 | 57,41<br>57,06 | 10,71<br>11,96 | 7,44<br>7,19 | |
| 16 | 93,8 | 51,62<br>51,07 | 8,66<br>9,17 | 9,26<br>9,17 | Lösungsmittel: DMSO |
| 17 | 99,5 | 43,98<br>42,69 | 6,71<br>6,43 | 18,65<br>17,95 | |
| 18 | 93,6 | 49,96<br>49,75 | 9,58<br>9,93 | 4,16<br>3,94 | |

| Beispiel | Ausbeute in % | Analysen berechnet gefunden % C | % H | % N | Anmerkungen |
|---|---|---|---|---|---|
| 19 | 97,6 | 53,82<br>52,85 | 7,74<br>7,68 | 8,96<br>8,87 | |
| 20 | 83,5 | 58,58<br>56,40 | 6,98<br>7,10 | 10,78<br>- | |
| 21 | 90,1 | 56,17<br>55,76 | 6,93<br>6,69 | 11,56<br>11,03 | |
| 22 | 88,5 | 48,14<br>46,75 | 7,07<br>7,04 | 14,03<br>13,42 | |
| 23 | 95,6 | 49,66<br>49,50 | 7,05<br>6,82 | 8,91<br>8,58 | |
| 24 | 87,6 | 47,25<br>48,08 | 6,71<br>7,92 | 8,47<br>8,12 | |
| 25 | 93,9 | 51,20<br>50,41 | 7,36<br>7,37 | 8,53<br>8,66 | |
| 26 | 80,6 | 45,47<br>45,43 | 6,16<br>6,42 | 12,24<br>11,46 | |
| 27 | 98,7 | 63,39<br>63,56 | 8,29<br>8,30 | 8,87<br>8,73 | |
| 28 | 82,7 | 60,94<br>60,11 | 7,00<br>7,87 | 7,48<br>7,70 | |
| 29 | 97,6 | 65,06<br>64,98 | 6,64<br>6,63 | 6,60<br>6,51 | |
| 30 | 95,9 | 45,18<br>45,28 | 8,27<br>8,91 | 9,58<br>9,84 | |
| 31 | 72,4 | 45,34<br>45,05 | 8,65<br>9,18 | 14,42<br>- | |
| 32 | 91,8 | 48,13<br>49,62 | 6,21<br>6,98 | 17,27<br>17,15 | |
| 33 | 99,0 | 51,99<br>50,31 | 6,54<br>6,88 | 12,99<br>12,11 | |
| 34 | 90,4 | 55,88<br>56,41 | 6,88<br>7,13 | 8,69<br>8,45 | |
| 35 | 96,8 | 56,41<br>56,05 | 5,98<br>6,08 | 6,92<br>6,81 | |
| 36 | 75,0 | 49,11<br>48,44 | 6,47<br>6,69 | 8,18<br>7,76 | |

Degussa Aktiengesellschaft

6000 Frankfurt am Main, Weissfrauenstraße 9

Patentansprüche:

N,N'- und N,N',N'-substituierte Silylharnstoffe und Verfahren zu deren Herstellung

1. N,N'- und N,N',N'-substituierte Silylharnstoffe der Formel (I)

$$(RO)_{3-n}(CH_3)_nSi-R^1-NH-CO-N\begin{matrix}R^2\\R^3\end{matrix},$$

in der bedeuten

n: O oder 1

R: $C_1$-$C_6$ Alkyl, linear oder verzweigt, Phenyl, $C_5$-$C_8$ Cycloalkyl

$R^1$: $-(CH_2)_3-$, $-(CH_2)_2-$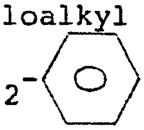$-CH_2-$,

$R^2$: Wasserstoff,

$R^2$, $R^3$: gleich oder verschieden:

$C_1$-$C_{18}$ Alkyl, linear oder verzweigt,

$C_5$-$C_8$ Cycloalkyl,

$C_1$-$C_3$ Alkyl, endständig substituiert durch eine Amino-, Thio- oder Cyanogruppe,

$-(C_2H_4NH)_mH$ mit m : 2 oder 3,

$C_3$-$C_{18}$ Alkenyl, linear oder verzweigt,

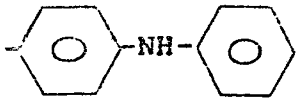,

Benzyl, Phenyl, Naphthyl, Pyridyl, Triazyl, gegebenenfalls ein oder mehrfach substituiert durch eine Amino-, Hydroxyl-, Thio-, $C_1$-$C_3$ Alkoxy-, Nitro- oder Carboxylgruppe

oder Silylreste der Formel (II)

$$(RO)_{3-n}(CH_3)_nSi-R^4$$

in der n und R die Bedeutung haben, die oben angegeben wird und $R^4$: $C_1$-$C_3$ Alkylen, $-(CH_2)_2-$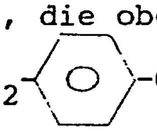$-CH_2-$ ist,

oder daß $R^2$ und $R^3$ zusammen mit dem Stickstoffatom sowie gegebenenfalls einem oder zwei weiteren Heteroatomen einen einwertigen fünf- bis vierzehngliedrigen gesättigten oder ungesättigten cyclischen Rest mit 2 bis 12 C-Atomen bilden,
mit Ausnahme der Verbindungen

1. $(C_2H_5O)_2R^6Si\ (CH_2)_3-NH-CO-NHR^5$
   mit $R^5$: Cyclohexyl und $R^6$: Methyl
   oder $R^5$: Phenyl und $R^6$: Ethoxy
   und

2. $(CH_3O)_3Si(CH_2)_3-NH-CO-NH-(CH_2)_3-Si(OC_2H_5)_3$
   und

3. $(CH_3O)_3-Si-(CH_2)_3-NH-CO-N(R^7)(CH_3)$
   mit $R^7$: $CH_3$, H

2. Verfahren zur Herstellung der in Anspruch 1 aufgeführten Verbindungen, dadurch gekennzeichnet, daß man

der Lösung einer Aminoverbindung der Formel III

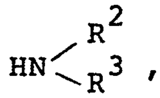

in der $R^2$ und $R^3$ die bereits angegebenen Bedeutungen haben,

in einem aprotischen, polaren organischen Lösungsmittel erst eine äquimolare Menge Alkalicyanat und anschließend die äquimolare Menge eines Halogensilans der Formel IV

$$(RO)_{3-n}(CH_3)_nSi-R^1-X \quad \text{zusetzt,}$$

in der R, $R^1$ und n die bereits angegebenen Bedeutungen haben, und X = Cl, Br oder I ist,

auf 120° bis 155°C erwärmt,

1 bis 8 Stunden bei 130 bis 150°C, bevorzugt 140°C, rührt und nach erfolgter Umsetzung das gewünschte Produkt abtrennt.

3. Verfahren nach Anspruch 2, dadurch gekennzeichnet, daß man als Lösungsmittel DMF oder DMSO einsetzt.

Europäisches Patentamt

# EUROPÄISCHER RECHERCHENBERICHT

0169992

Nummer der Anmeldung

EP 85 10 6181

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | PATENT ABSTRACTS OF JAPAN, Band 5, Nr. 120 (C-65), 4. August 1981, Seite 83 C 65; & JP - A - 56 57792 (SHINETSU KAGAKU) 20.05.1981 (Cat. D); & CHEMICAL ABSTRACTS, Band 95, Nr. 23, 7. Dezember 1981, Seite 701, Spalte 1, Abstract Nr. 204144w, Columbus, Ohio, US; SHIN ETSU CHEMICAL INDUSTRY CO. LTD. "Alkoxysilanes containing ureide groups" --- | 1 | C 07 F 7/18<br>C 07 F 7/10 |
| X,D | NL-A-8 006 415 (PPG INDUSTRIES) * Anspruch 8, Seite 6, Zeilen 26-28 * --- | 1 | |
| X,D | US-A-4 046 794 (UNION CARBIDE) * Spalte 6, Tabelle 2, Formel * --- | 1 | RECHERCHIERTE SACHGEBIETE (Int. Cl 4) |
| A | GB-A- 990 161 (DOW CORNING) --- | 1 | C 07 F 7/10<br>C 07 F 7/18 |
| A | US-A-3 726 907 (J.P. STEVENS) --- | 1 | |
| D,A | US-A-3 493 461 (UNION CARBIDE) ----- | 1 | |

Der vorliegende Recherchenbericht wurde für alle Patentansprüche erstellt

| Recherchenort | Abschlußdatum der Recherche | Prüfer |
|---|---|---|
| BERLIN | 12-10-1985 | KAPTEYN H G |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82